(19) Europäisches Patentamt
European Patent Office
Office européen des brevets

(11) **EP 2 626 697 B1**

(12) **EUROPEAN PATENT SPECIFICATION**

(45) Date of publication and mention
of the grant of the patent:
**31.10.2018 Bulletin 2018/44**

(51) Int Cl.:
***G01N 30/32*** *(2006.01)*       ***G01N 30/20*** *(2006.01)*

(21) Application number: **12154228.6**

(22) Date of filing: **07.02.2012**

(54) **Liquid chromatography device**

Flüssigchromatografievorrichtung

Dispositif de chromatographie liquide

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.08.2013 Bulletin 2013/33**

(73) Proprietor: **King Saud University
11421 Riyadh (SA)**

(72) Inventors:
• **Al-Warthan, Abdulrahman Abdullah
11333 Riyadh (SA)**
• **Hadj Ahmed, Ahmed Yacine Badjah
Riyadh 11333 (SA)**
• **Al-Othman, Zeid Abdullah
Riyadh 11333 (SA)**
• **Aqel, Ahmad
Riyadh 11333 (SA)**

(74) Representative: **Goddar, Heinz J.
Boehmert & Boehmert
Anwaltspartnerschaft mbB
Pettenkoferstrasse 22
80336 München (DE)**

(56) References cited:
**EP-A1- 0 495 255     EP-A2- 0 329 290
FR-A1- 2 192 853**

• **TAKEUCHI T ET AL: "Split flow and bypass flow systems for monolithic capillary columns in liquid chromatography", JOURNAL OF CHROMATOGRAPHY, ELSEVIER SCIENCE PUBLISHERS B.V, NL, vol. 1021, no. 1-2, 22 December 2003 (2003-12-22), pages 55-59, XP004471337, ISSN: 0021-9673, DOI: 10.1016/J.CHROMA.2003.08.087**
• **DJORDJEVIC,N. M. AND HOUDIERE,F.: "Simultaneous programming of two parameters in micro- and capillary-HPLC", REVIEWS IN ANALYTICAL CHEMISTRY, vol. 17, no. 4, 1998, pages 207-221, XP002677638, Berlin Germany ISSN: 0793-0135**

**Description**

The present invention relates to a liquid chromatography device.

The term liquid chromatography (LC) covers various techniques which are useful analytical tools for separation, identification and determination of a wide range of compounds and various simple or complex mixtures. During the recent years, capillary liquid chromatography has emerged as a promising micro-separation technique that combines high efficiency and system miniaturization.

In capillary LC columns having smaller internal diameters than conventional packed HPLC columns are used. For a given injection sample volume, a smaller column diameter gives higher peaks which lead to a better detection limit. Thus, a capillary column with a 0.1 mm inner diameter corresponds to a sensitivity more than 2000 times higher compared to a conventional 4.6 mm packed column.

The volume of the injected sample is another important parameter which can affect both the sensitivity and the column performance. Most recent capillary LC instruments are equipped with nano-injectors allowing injection of sample volumes in the nanoliter range. However, commercial nano-injectors have a fixed volume which can not be changed as with conventional injectors which are equipped with a changeable sample loop.

US 6,289,914 B1 relates to a micro splitter in flow systems especially used for separation techniques in analytical chemistry such as microliquid chromatography, high pressure liquid chromatography and ancillary techniques. The splitter system comprises a micro splitter and a micro mixer which are connected by a microbore tubing.

US 7,465,382 B2 discloses a precision flow controller which is capable of providing a flow rate less than 100 microliters/minute and varying the flow rate in a prescribed manner where the accuracy and precision of the flow rate is less than 5% of the flow rate.

US 2009/0165873 A1 relates to a splitter for a pressurized primary flow stream of a mobile phase. The splitter comprises a first splitting stage that divides the primary flow stream between a major split flow stream and a minor split flow stream and a second splitting stage that divides the diluted minor flow stream.

US 2007/0283746 A1 discloses an injection device including a carrier inlet, a sample inlet, a waste outlet and a chamber outlet attached to a separation column. Valves are used to control flow such that the sample flows into chamber and is carried into the chamber outlet.

It is an object of the present invention to provide a liquid chromatography device which overcomes the drawbacks of the prior art. Particularly, a liquid chromatography device shall be provided which allows to reduce and control simultaneously both the mobile phase flow rate as well as the volume of the injected sample. Further, it is an object of the present invention to provide a liquid chromatography device to reduce and control the column flow rate and the sample volume in a wide range as well as to fine control the sample volume in an easy, accurate, reproducible and cost efficient way.

These objects are achieved by a liquid chromatography device comprising:

    a) a pump;

    b) a sample injector;

    c) a splitting device;

    d) a restrictor ; and

    e) a liquid chromatography column and detection and analyzing unit;

wherein the pump, the sample injector, the splitting device and the liquid chromatography column are connected in series; the sample injector and the splitting device are placed between the pump and the liquid chromatography column; and the splitting device is further connected with the restrictor.

In the invention, the splitting device is placed behind the sample injector.

The pump is a high performance liquid chromatography (HPLC) pump. In a further preferred embodiment, the sample injector is a six-port injector equipped with a fixed volume sample loop.

Preferred, the splitting device is a splitting tee.

In one embodiment, the splitting tee is a zero dead volume tee.

In the invention the restrictor is a tubing.

Preferably, the tubing is a capillary tubing.

Even preferred, the liquid chromatography column is a capillary liquid chromatography column.

Preferably, the splitting device and the restrictor are made of stainless steel or polyether ether ketone (PEEK).

The length of the tubing can be in a range from 0.1 to 10 mm, or in a range from 1 to 5 mm. According to the invention it is in a range from 2 to 4 mm, and the diameter of the tubing can be in a range from 10 to 500 $\mu$m, according to the invention it is in a range from 100 to 200 $\mu$m.

The length of the liquid chromatography column can be in a range from 10 to 500 mm. According to the invention it is in a range from 50 to 200 mm, and the diameter of the liquid chromatography column 5 can be in a range from 100 to 500 $\mu$m, according to the invention it is in a range from 300 to 400 $\mu$m.

Preferably, the connections between the pump, the sample injector, the splitting device, the restrictor and the liquid chromatography column are made by capillary tubes and the fittings of the connections are made of PEEK.

In a most preferred embodiment, the liquid chromatography device according to the present invention consists of a pump, a sample injector, a splitting device, a restrictor, a liquid chromatography column and detection and analyzing unit. Any detection and analyzing unit known in the art can be taken for the inventive liquid chromatography device.

According to the invention is also the use of the inventive liquid chromatography device for generating very small sample values having a volume in a range from 1 nl to 20 $\mu$l, preferably having a volume in a range from 1 to 300 nL, most preferably having a volume in a range from 1 to 50 nL.

Surprisingly, it was found that the inventive liquid chromatography device solves the problems by providing an easy and cost-efficient way to reduce and control the mobile phase flow rate as well as the sample injection volume in liquid chromatography processes in a wide range from several micro liters/min to a few nano liters/min.

Further characteristics and advantages of the invention result from the detailed description of the preferred embodiment particularly in context with the examples and the attached drawings, wherein

Fig. 1 shows a schematic illustration of an embodiment of the liquid chromatography device according to the invention.

Fig. 2 shows the relation between total flow $F_t$ and column flow $F_c$ for an inventive device.

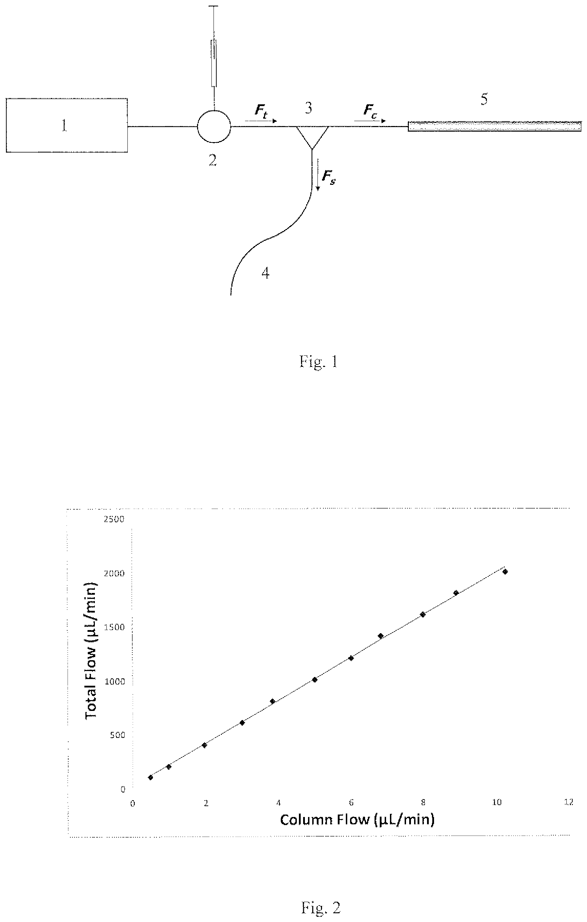

Reference is now made to Fig. 1 which illustrates the liquid chromatography device and its components, according to an embodiment of the invention. The inventive liquid chromatography device comprises a pump 1, a sample injector 2, a splitting device 3, a restrictor 4 and a liquid chromatography column 5.

Any pumps suitable to provide a constant or variable liquid flow in liquid chromatography can be used as pump 1 of the inventive liquid chromatography device, e.g. a conventional HPLC pump with a flow rate in the range from 0.01 to 10 mL/min. The pump 1 is in direct connection with the sample injector 2, whereby the connection is made by an appropriate tubing, for example by a capillary tubing. The fittings connecting the appropriate tubing with the pump 1 and the sample injector 2 are made of a material allowing working under pressure. Particularly, PEEK can be advantageously used as fitting material due to its highly inert and resistant properties.

A sample to be be analyzed can be provided in the sample injector using conventional methods, for example by injection of the sample using a syringe. The sample injector 2 is in connection with the splitting device 3. Connections are again made by using tubing and fitting devices as mentioned above.

The splitting device 3 consists of a simple tee-fitting made of stainless steal or PEEK with three openings for making connection with the other components of the inventive liquid chromatography device. The splitting device 3 should have the lowest internal volume possible (known as "zero dead volume") to avoid sample dilution and unnecessary PEEK broadening. Using a splitting device made of PEEK allows working with pressures up to 5.000 psi (5000 psi ~ 35000 kPa). If it is intended to operate under higher pressures up to 10.000 psi, stainless steal would be the splitting device 3 material of choice.

One of the remaining openings of the splitting tee is used to make contact to the restrictor 4. A tubing can be used as restrictor. By choosing the length and the inner diameter of the tubing, the mobile phase flow rate and the volume of the injected sample can be manipulated as discussed in detail below.

By means of the remaining third opening of the splitting tee, contact is made to the liquid chromatography column 5. In combination with the inventive liquid chromatography device an appropriate sensor or analyzer, for example in case of analyzing aromatic or colored substances an UV/V is detector, can be attached to the inventive device behind the liquid chromatography column 5.

By using the inventive liquid chromatography device, the mobile phase with a total flow rate ($F_t$) is split into two parts, the column flow $F_c$ through the liquid chromatography column 5 and the split flow ($F_s$) through the restrictor 4. The split ratio R represents the total flow to column flow ration:

$$ R = F_t / F_c $$

On the one hand, the split ratio R depends on the liquid chromatography column 5 characteristics (length, diameter, porosity, etc.). Besides this, it can notablely be adjusted by changing the length and/or the inner diameter of the restrictor 4. On the other hand, by using a constant split ratio R the mobile phase flow rate through the liquid chromatography column 5 $F_c$ can be very simply controlled by adjusting the total flow rate $F_t$ at the pump 1. Thus, the flow rate through the liquid chromatography column 5 $F_c$ can be accurately adjusted in a very wide range from several microliters/min down to a few nanoliters/min.

Another critical issue of the invention is to provide the possibility to control the sample injection volume in capillary chromatography. After injection of the sample through the sample injector 2 it is split with the mobile phase in the same ratio R. This derivation technique allows injection of very small amounts of sample to the liquid chromatography column 5 while the remaining sample volume is flushed through the restrictor 4. Subsequently, the mobile phase excess flowing through the restrictor 4 can be sent back to the solvent reservoir, in case of isocratic LC operation. This option contributes to a drastically reduction of solvent consumption.

In conclusion, it can be noted that the longer the restrictor or the lower its inner diameter, the lower will be the split flow $F_s$ and the higher the split ratio R. Thus, when using the same restrictor 4, the R to $F_c$ ratio remains constant, as shown in Fig. 2.

Another interesting option according to the present invention is to place the splitting device 3 between the pump 1 and the sample injector 2. This allows to split only the mobile phase flow without effecting the injected sample volume which corresponds therefore to the entire sample loop volume. This option permits a full loop injection of the sample without affecting either the column flow rate or the retention time.

A specific example for the use of the liquid chromatography device of the present invention is given in the following in order to illustrate the invention without limiting its scope in any way.

A capillary monolithic column 5 of the dimensions 100mm x 0.320mm i.d was used. The mobile phase consisted of an acetonitrile/water mixture (50:50, v/v) with a total flow rate set at the pump 1 of 0.6 mL/min. The sample injector 2 was equipped with a sample loop made of PEEK tubing (71 mm length, 0.127 mm i.d.). The corresponding volume of this loop was 900 nL. As model analyte, a toluene solution (concentration 0.04% in acetonitrile) was injected with UV detection at a wavelength of 260 nm. The splitting tee 3 was placed between the sample injector 2 and the capillary column 5, as it can be seen in Fig. 1. The restrictor 4 was a PEEK tube with a length of 3 m and an inner diameter of 0.127 mm.

Under this conditions, the total flow $F_t$ was 0.6 mL/min while the column flow measured accurately at the column outlet $F_c$ was 3 μL/min. The corresponding split ratio is:

$$R = F_t/F_c = 0.6/0.003 = 200$$

This means that the sample volume injected through the column is split in the same ratio and corresponds to:

$$V_{inj} = 900 / 200 = 4.5nL.$$

To assess the accuracy and reproducibility of the presented method, several experiments were carried out by modifying the total flow rate at the pump and measuring the actual mobile phase flow rate at the capillary column outlet. The obtained values are presented in Fig. 2.

The total flow rate ranged from 0.1 to 2.0mL/min while the corresponding measured column flow rate was in the range 0.5 to 10μL/min. Fig. 2 shows that the relationship is linear in the investigated range with a correlation factor of 0.9988. The split ratio with a value of 200 corresponds to the curve slope and is constant on the whole range.

The features disclosed in the foregoing description, the claims and the accompanying drawings may, both separately and in any combination thereof, be material for realizing the invention in diverse forms thereof.

**Claims**

1. Liquid chromatography device comprising:

    a) a pump (1);
    b) a sample injector (2);
    c) a splitting device (3);
    d) a restrictor (4); and
    e) a liquid chromatography column (5) and detection and analyzing unit;

    wherein the pump (1), the sample injector (2), the splitting device (3) and the liquid chromatography column (5) are connected in series; the sample injector (2) and the splitting device (3) are placed between the pump (1) and the liquid chromatography column (5); and the splitting device (3) is further connected with the restrictor (4); **characterized in that** the splitting device (3) is placed behind the sample injector (2), wherein the pump is a HPLC pump with a flow rate in the range from 0.01 to 10 ml/min, wherein the restrictor is a tubing, wherein the length of the tubing is in a range from 2 to 4 mm, and the diameter of the tubing is in a range from 100 to 200 μm, wherein the length of the liquid chromatography column (5) is in a range from 50 to 200 mm, and the diameter of the liquid chromatography column (5) is in a range from 300 to 400 μm.

2. Liquid chromatography device according to claim 1, wherein the pump (1) is a high performance liquid chromatography (HPLC) pump.

3. Liquid chromatography device according to claims 1 or 2, wherein the sample injector (2) is a six-port injector equipped with a fixed volume sample loop.

4. Liquid chromatography device according to any of the preceding claims, wherein the splitting device (3) is a splitting tee.

5. Liquid chromatography device according to claim 4, wherein the splitting tee is a zero dead volume tee.

6. Liquid chromatography device according to claim 1 wherein the tubing is a capillary tubing.

7. Liquid chromatography device according to any of the preceding claims, wherein the liquid chromatography column (5) is a capillary liquid chromatography column.

8. Liquid chromatography device according to any of the preceding claims, wherein the splitting device (3) and the restrictor (4) are made of stainless steel or polyether ether ketone (PEEK).

9. Liquid chromatography device according to any of the preceding claims, wherein the connections between the pump (1), the sample injector (2), the splitting device (3), the restrictor (4) and/or the liquid chromatography column (5) are made by capillary tubes and the fittings of the connections are made of PEEK.

10. Use of the liquid chromatography device according to any of the preceding claims for generating very small sample values having a volume in a range from 1 nl to 20 µl, preferably having a volume in a range from 1 to 300 nL, most preferably having a volume in a range from 1 to 50 nL.

**Patentansprüche**

1. Flüssigchromatografievorrichtung, welche umfasst:

   a) eine Pumpe (1);
   b) einen Probeninjektor (2);
   c) eine Teilungsvorrichtung (3);
   d) einen Begrenzer (4); und
   e) eine Flüssigchromatografiesäule (5) und Detektions- und Analysevorrichtung;

   wobei die Pumpe (1), der Probeninjektor (2), die Teilungsvorrichtung (3) und die Flüssigchromatografiesäule (5) in Reihe geschaltet sind;
   der Probeninjektor (2) und die Teilungsvorrichtung (3) zwischen der Pumpe (1) und der Flüssigchromatografiesäule (5) angeordnet sind; und die Teilungsvorrichtung (3) weiter mit dem Begrenzer (4) verbunden ist;
   **dadurch gekennzeichnet, dass** die Teilungsvorrichtung (3) hinter dem Probeninjektor (2) angeordnet ist,
   wobei die Pumpe eine HPLC-Pumpe mit einer Förderrate im Bereich von 0,01 bis 10 ml/min ist, wobei der Begrenzer (4) eine Rohrleitung ist, wobei die Länge der Rohrleitung in einem Bereich von 2 bis 4 mm ist und der Durchmesser der Rohrleitung in einem Bereich von 100 bis 200 µm ist,
   wobei die Länge der Flüssigchromatografiesäule (5) in einem Bereich von 50 bis 200 mm und der Durchmesser der Flüssigchromatografiesäule (5) in einem Bereich von 300 bis 400 µm ist.

2. Flüssigchromatografievorrichtung nach Anspruch 1, wobei die Pumpe (1) eine Hochleistungsflüssigchromatographie(HPLC)-Pumpe ist.

3. Flüssigchromatografievorrichtung nach Anspruch 1 oder 2, wobei der Probeninjektor (2) ein sechsanschlüssiger Injektor ist, ausgestattet mit einer Probenschleife mit festem Volumen.

4. Flüssigchromatografievorrichtung nach einem der vorhergehenden Ansprüche, wobei die Teilungsvorrichtung (3) ein Teilungs-T-Stück ist

5. Flüssigchromatografievorrichtung nach Anspruch 4, wobei das Teilungs-T-Stück ein Null-Totvolumen-T-Stück ist.

6. Flüssigchromatografievorrichtung nach Anspruch 1, wobei die Rohrleitung eine Kapillarrohrleitung ist.

7. Flüssigchromatografievorrichtung nach einem der vorangehenden Ansprüche, wobei die Flüssigchromatografiesäule (5) eine Kapillarflüssigchromatografiesäule ist.

8. Flüssigchromatografievorrichtung nach einem der vorangehenden Ansprüche, wobei die Teilungsvorrichtung (3) und der Begrenzer (4) aus Edelstahl oder Polyetheretherketon (PEEK) hergestellt sind.

9. Flüssigchromatografievorrichtung nach einem der vorangehenden Ansprüche, wobei die Verbindungen zwischen der Pumpe (1), dem Probeninjektor (2), der Teilungsvorrichtung (3), dem Begrenzer (4) und/oder der Flüssigchromatografiesäule (5) aus Kapillarröhrchen hergestellt sind und die Fittings der Verbindungen aus PEEK hergestellt sind.

10. Verwendung der Flüssigchromatografievorrichtung nach einem der vorangehenden Ansprüche zur Erzeugung sehr kleiner Probenwerte mit einem Volumen in einem Bereich von 1 nl bis 20 µl, bevorzugt einem Volumen in einem Bereich von 1 bis 300 nL, am bevorzugtesten einem Volumen in einem Bereich von 1 bis 50 nL.

**Revendications**

1. Dispositif de chromatographie liquide comportant

   a) une pompe (1) ;
   b) un injecteur d'échantillon (2),
   c) un dispositif de séparation (3) ;
   d) un restricteur (4) ; et
   e) une colonne de chromatographie liquide (5) ainsi qu'une unité de détection et d'analyse ;

   **caractérisé en ce que** la pompe (1), l'injecteur d'échantillon (2), le dispositif de séparation (3) et la colonne de chromatographie liquide (5) sont connectés en série ; l'injecteur d'échantillon (2) et le dispositif de séparation (3) sont placés entre la pompe (1) et la colonne de chromatographie liquide (5) ; et le dispositif de séparation (3) est connecté au restricteur (4) ; **caractérisé en ce que** le dispositif de séparation (3) est placé derrière l'injecteur d'échantillon (2), **caractérisé en ce que** la pompe est une pompe HPLC (chromatographie liquide à haute performance) dont le débit est compris entre 0,01 et 10 ml/min,

**caractérisé en ce que** le restricteur est un tube dont la longueur est comprise entre 2 et 4 mm, et dont le diamètre est compris entre 100 et 200 $\mu$m,

**caractérisé en ce que** la longueur de la colonne de chromatographie liquide (5) est comprise entre 50 et 200 mm, et **en ce que** le diamètre de la colonne de chromatographie liquide (5) est compris entre 300 et 400 $\mu$m.

2. Dispositif de chromatographie liquide selon la revendication 1, **caractérisé en ce que** la pompe (1) est une pompe HPLC (chromatographie liquide à haute performance).

3. Dispositif de chromatographie liquide selon la revendication 1 ou 2, **caractérisé en ce que** l'injecteur d'échantillon (2) est un injecteur à six orifices équipé d'une boucle d'échantillon de volume fixe.

4. Dispositif de chromatographie liquide selon l'une quelconque des revendications précédentes **caractérisé en ce que** le dispositif de séparation (3) est une pièce en T de séparation.

5. Dispositif de chromatographie liquide selon la revendication 4, **caractérisé en ce que** la pièce en T de séparation est une pièce en T à volume mort égal à zéro,

6. Dispositif de chromatographie liquide selon la revendication 1, **caractérisé en ce que** le tube est un tube capillaire.

7. Dispositif de chromatographie liquide selon l'une quelconque des revendications précédentes, **caractérisé en ce que** la colonne de chromatographie liquide (5) et une colonne de chromatographie liquide capillaire.

8. Dispositif de chromatographie liquide l'une quelconque des revendications précédentes **caractérisé en ce que** le dispositif de séparation (3) et le restricteur (4) sont réalisés en acier inoxydable ou en cétone de polyéther éther (PEEK).

9. Dispositif de chromatographie liquide selon l'une quelconque des revendications précédentes, **caractérisé en ce que** les raccordements entre la pompe (1), l'injecteur d'échantillon (2), le dispositif de séparation (3), le restricteur (4) et/ou la colonne de chromatographie liquide (5) sont effectués au moyen de tubes capillaires et les raccords de tuyauteries réalisés en PEEK.

10. Utilisation du dispositif de chromatographie liquide selon l'une quelconque des revendications précédentes, servant à produire des échantillons de grandeur minime dont le volume est compris entre 1 nl et 20 $\mu$l, de préférence entre 1 et 300 nL, et de préférence encore entre 1 et 50 nL.

Fig. 1

Fig. 2

**EP 2 626 697 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6289914 B1
- US 7465382 B2
- US 20090165873 A1
- US 20070283746 A1